# EUROPÄISCHE PATENTSCHRIFT

(11) **EP 3 685 053 B1**
(45) Veröffentlichungstag und Bekanntmachung des Hinweises auf die Patenterteilung: **27.10.2021**
(21) Anmeldenummer: 18734444.5
(22) Anmeldetag: 11.06.2018
(51) Int. Cl.: F16B 5/06, F16B 5/02

(54) **SICHERUNGSELEMENT UND VERLIERSICHERUNGSSYSTEM**
SECURING ELEMENT AND LOSS-PREVENTION SYSTEM
ÉLÉMENT DE BLOCAGE ET SYSTÈME ANTI-PERTE

(30) Priorität: 25.08.2017 DE 102017214910
(43) Veröffentlichungstag der Anmeldung: 29.07.2020
(73) Patentinhaber: Siemens Mobility GmbH, 81739 München (DE)
(72) Erfinder: NITZSCHE, Christian, 85737 Ismaning (DE)
(86) Internationale Anmeldenummer: PCT/EP2018/065287
(87) Internationale Veröffentlichungsnummer: WO 2019/037915

(56) Entgegenhaltungen:
- EP-A1- 1 050 940
- US-A- 3 730 466

## Beschreibung

Die vorliegende Erfindung betrifft ein Verliersicherungssystem mit einem Sicherungselement zum Sichern von Bauteilen eines Schienenfahrzeugs.

Im Eisenbahnbereich kann es die Vorgabe geben, dass Schraubverbindungen von im Unterflurbereich eines Schienenfahrzeugs montierten Bauteilen nicht auf Zug belastet sein dürfen oder, dass das Schienenfahrzeug mit einem Sicherungselement ausgestattet sein muss, wenn eine Schraubverbindung im Unterflurbereich auf Zug belastet ist. Eine solche Vorgabe ist beispielsweise in den USA zu beachten.

Aus dem Stand der Technik EP 1 050 940 A1 und US 3,730,466 A1 sind Befestigungssysteme mit Klammern bekannt.

Aus dem Stand der Technik ist ein Sicherungselement mit horizontal angeordneten und beidseitig gesicherten Bolzen zwischen einer Wagenkastenstruktur und einem anzubauenden Bauteil bekannt.

Eine Aufgabe der vorliegenden Erfindung besteht darin, ein verbessertes Sicherungselement zum Sichern von Bauteilen eines Fahrzeugs, insbesondere eines Schienenfahrzeugs und ein Verliersicherungssystem mit mindestens einem Sicherungselement und einem gesicherten Bauteil anzugeben.

Diese Aufgaben werden durch ein Verliersicherungssystem mit den Merkmalen des unabhängigen Anspruchs 1 gelöst. In den abhängigen Ansprüchen sind verschiedene Ausführungsformen angegeben.

Ein Sicherungselement zum Sichern von Bauteilen eines Fahrzeugs, insbesondere eines Schienenfahrzeugs weist einen ersten Abschnitt, eine erste Lasche und eine zweite Lasche auf.

Der erste Abschnitt ist in Form einer länglichen Platte ausgebildet und erstreckt sich in einer ersten Ebene. In dem ersten Abschnitt ist mindestens eine erste Durchgangsöffnung angeordnet. Die erste Durchgangsöffnung ist dazu ausgebildet, eine erste lösbare Verbindung zum Befestigen des Sicherungselements an einem ersten Bauteil zumindest abschnittsweise aufzunehmen. Der erste Abschnitt weist eine lange Seite auf. Die erste Lasche und die zweite Lasche sind an der langen Seite des ersten Abschnitts gegenüberliegend zueinander angeordnet und ragen aus der ersten Ebene auf eine gemeinsame Seite des ersten Abschnitts. Die erste Lasche ist dazu ausgebildet, oberseitig an dem ersten Bauteil aufzuliegen. Die zweite Lasche ist dazu ausgebildet, ein zweites Bauteil unterseitig abzustützen und gegen ein Herabfallen zu sichern.

Diese Ausgestaltung hat den Vorteil, dass eine einfache und zuverlässige Verliersicherung bereitgestellt werden kann, die insbesondere, wenn das zweite Bauteil an dem ersten Bauteil mittels einer auf Zug belasteten Schraubverbindung befestigt wird, bei einem Ausfall der Schraubverbindung ein Abfallen des zweiten Bauteils, das unterseitig des ersten Bauteils angeordnet ist, dadurch verhindert, dass die erste Lasche oberseitig auf dem ersten Bauteil aufliegt, während das zweite Bauteil oberseitig auf der zweiten Lasche aufliegt. Das Sicherungselement ist ferner besonders einfach und kostengünstig herstellbar sowie einfach durch nur eine Person montierbar.

In einer Ausführungsform weist die erste Lasche eine erste Aussparung auf. Die erste Aussparung ist dazu ausgebildet, das erste Bauteil zumindest abschnittsweise aufzunehmen. Die erste Lasche ist mit einem ersten festen Ende mit der langen Seite des ersten Abschnitts verbunden. Die erste Aussparung ist auf einer zur zweiten Lasche zugewandten Seite der ersten Lasche angeordnet und ist zur zweiten Lasche hin geöffnet. Die erste Aussparung ist angrenzend an das feste Ende angeordnet und ist vorzugsweise schlitzförmig ausgebildet. Diese Ausgestaltung hat den Vorteil, dass in montiertem Zustand das erste Bauteil in die erste Aussparung eingreifen kann, wodurch ein Verrutschen des Sicherungselements in zumindest eine Raumrichtung verhindert werden kann. In eine zweite Raumrichtung kann das Sicherungselement entlang dem ersten Bauteil verschoben werden. Dadurch ist eine einfache Positionierung des zweiten Bauteils relativ zum ersten Bauteil und des Sicherungselements relativ zum ersten Bauteil möglich.

In einer Ausführungsform weist die zweite Lasche eine zweite Aussparung auf. Die zweite Aussparung ist dazu ausgebildet, das zweite Bauteil zumindest abschnittsweise aufzunehmen. Die zweite Lasche ist mit einem zweiten festen Ende mit der langen Seite des ersten Abschnitts verbunden. Die zweite Aussparung ist angrenzend an das zweite feste Ende angeordnet. Die zweite Aussparung ist vorzugsweise schlitzförmig ausgebildet. Die zweite Aussparung ist auf einer zur ersten Lasche zugewandten Seite der zweiten Lasche angeordnet und ist zur ersten Lasche hin geöffnet. In montiertem Zustand des Verliersicherungssystems kann in die zweite Aussparung das zweite Bauteil zumindest abschnittsweise eingreifen, wodurch ein Verrutschen des zweiten Bauteils verhindert werden kann. Dadurch liegt das zweite Bauteil sicher an der zweiten Lasche an.

In einer Ausführungsform weist die erste Lasche einen ersten Laschenbereich und einen ersten Bogenbereich auf. Die zweite Lasche weist einen zweiten Laschenbereich und einen zweiten Bogenbereich auf. Der erste und der zweite Laschenbereich sind plattenförmig ausgebildet. Der erste Laschenbereich erstreckt sich in einer zweiten Ebene. Der zweite Laschenbereich erstreckt sich in einer dritten Ebene. Die zweite und die dritte Ebene sind jeweils in einer ersten Richtung parallel zum ersten Abschnitt und in einer zweiten Richtung geneigt, vorzugweise senkrecht, zu dem ersten Abschnitt angeordnet. Der erste Laschenbereich grenzt an ein erstes freies Ende an. Der zweite Laschenbereich grenzt an ein zweites freies Ende an. Der erste Bogenbereich verbindet den ersten Laschenbereich mit dem ersten Abschnitt. Der zweite Bogenbereich verbindet den zweiten Laschenbereich mit dem ersten Abschnitt. Dadurch kann die erste Lasche mit ihrem ersten Laschenbereich, der sich in der zweite Ebene erstreckt, auf dem ersten Bauteil aufliegen. Das zweite Bauteil kann dadurch auf dem zweiten Laschenbereich der zweiten Lasche, der sich in der dritten Ebene erstreckt, aufliegen.

In einer Ausführungsform überlappen sich die zweite Ebene und die dritte Ebene oder die zweite Ebene ist parallel zu der dritten Ebene ausgebildet. Dadurch kann das Werkzeug zur Herstellung des Sicherungselements besonders einfach ausgebildet sein.

In einer Ausführungsform weist das Sicherungselement einen zweiten Abschnitt und einen dritten Abschnitt auf. Der zweite Abschnitt und der dritte Abschnitt sind jeweils in Form einer länglichen Platte ausgebildet. Der zweite Abschnitt und der dritte Abschnitt erstrecken sich in der ersten Ebene. Der dritte Abschnitt und der erste Abschnitt sind versetzt zueinander angeordnet. Der zweite Abschnitt ist geneigt, vorzugsweise senkrecht, zu dem ersten Abschnitt und/oder zu dem dritten Abschnitt angeordnet. Der zweite Abschnitt ist zwischen dem ersten Abschnitt und dem dritten Abschnitt angeordnet und verbindet den ersten Abschnitt mit dem dritten Abschnitt. Der dritte Abschnitt ist parallel zum ersten Abschnitt angeordnet Das Sicherungselement weist ferner eine dritte Lasche und eine vierte Lasche auf. Der dritte Abschnitt weist eine lange Seite auf. Die dritte Lasche und die vierte Lasche sind an der langen Seite des dritten Abschnitts gegenüberliegend angeordnet und ragen aus der ersten Ebene auf eine gemeinsame Seite des dritten Abschnitts und auf die gleiche Seite wie die erste und zweite Lasche. Die dritte Lasche ist dazu ausgebildet, oberseitig an dem ersten Bauteil aufzuliegen. Die vierte Lasche ist dazu ausgebildet, das zweite Bauteil unterseitig abzustützen und gegen ein Herabfallen zu sichern. Dadurch kann das Sicherungselement besonders hohe Abstützkräfte aufnehmen.

In einer Ausführungsform weist der dritte Abschnitt mindestens eine zweite Durchgangsöffnung auf. Die zweite Durchgangsöffnung ist dazu ausgebildet, eine zweite lösbare Verbindung zum Befestigen des Sicherungselements an dem ersten Bauteil zumindest abschnittsweise aufzunehmen. Dadurch kann das Sicherungselement durch eine zweite lösbare Verbindung verdrehsicher mit dem ersten Bauteil verbunden sein.

In einer Ausführungsform weist die dritte Lasche eine dritte Aussparung und/oder die vierte Lasche eine vierte Aussparung auf. Die dritte Lasche ist mit einem dritten festen Ende und die vierte Lasche ist mit einem vierten festen Ende mit der langen Seite des dritten Abschnitts verbunden. Die dritte Aussparung ist dazu ausgebildet, das erste Bauteil zumindest abschnittsweise aufzunehmen und/oder die vierte Aussparung ist dazu ausgebildet, das zweite Bauteil zumindest abschnittsweise aufzunehmen. Die dritte Aussparung ist angrenzend an das dritte feste Ende der dritten Lasche und/oder die vierte Aussparung an das vierte feste Ende der vierten Lasche angeordnet. Die dritte Aussparung ist auf einer zur vierten Lasche zugewandten Seite der dritten Lasche angeordnet und zur vierten Lasche hin geöffnet und/oder die vierte Aussparung ist auf einer zur dritten Lasche zugewandten Seite der vierten Lasche angeordnet und zur dritten Lasche hin geöffnet. Dadurch ist das zweite Bauteil gegen ein Herabfallen besonders zuverlässig gesichert.

In einer Ausführungsform erstrecken sich die dritte Lasche abschnittsweise in einer vierten Ebene und die vierte Lasche abschnittsweise in einer fünften Ebene. Die zweite Ebene und die vierte Ebene und/oder die dritte Ebene und die fünfte Ebene sind parallel zueinander angeordnet.

In einer Ausführungsform sind die dritte Lasche und/oder die vierte Lasche auf einer dem ersten Abschnitt zugewandten Seite des dritten Abschnitts und die erste Lasche und/oder die zweite Lasche auf einer dem dritten Abschnitt zugewandten Seite des ersten Abschnitts angeordnet.

In einer Ausführungsform sind die dritte Lasche und/oder die vierte Lasche auf einer dem ersten Abschnitt abgewandten Seite des dritten Abschnitts und die erste Lasche und/oder die zweite Lasche auf einer dem dritten Abschnitt abgewandten Seite des ersten Abschnitts angeordnet.

Ein Verliersicherungssystem, vorzugsweise ein Schienenfahrzeug, weist mindestens ein Sicherungselement, ein erstes Bauteil und ein zweites Bauteil und wenigstens eine erste lösbare Verbindung und eine dritte lösbare Verbindung auf. Die erste lösbare Verbindung greift durch die erste Durchgangsöffnung und befestigt das Sicherungselement an dem ersten Bauteil. Die dritte lösbare Verbindung verbindet auf Zug belastet das erste Bauteil mit dem zweiten Bauteil. Das erste Bauteil und das zweite Bauteil sind zwischen der ersten Lasche und der zweiten Lasche zumindest abschnittweise angeordnet. Das zweite Bauteil liegt bei Versagen und/oder Lösen der dritten lösbaren Verbindung auf der zweiten Lasche auf und die zweite Lasche sichert das zweite Bauteil vor dem Herunterfallen. Die erste Lasche liegt bei Versagen und/oder Lösen der ersten lösbaren Verbindung auf dem ersten Bauteil auf und hält das Sicherungselement an dem ersten Bauteil.

In Ausführungsform weist das erste Bauteil einen ersten Eingriffsabschnitt auf. Der erste Eingriffsabschnitt ist parallel zu dem ersten Abschnitt ausgerichtet. Der erste Eingriffsabschnitt greift in die erste Aussparung ein. Bei Versagen und/oder Lösen der dritten lösbaren Verbindung liegt eine erste Anschlagsfläche des ersten Eingriffsabschnitts, die an einem freien Ende des ersten Eingriffsabschnitts angeordnet ist, auf einem Grund der ersten Aussparung auf. Dadurch liegt die erste Lasche sicher auf dem ersten Bauteil auf, wenn der erste Eingriffsabschnitt des ersten Bauteils in die erste Aussparung eingreift.

In einer Ausführungsform weist das zweite Bauteil einen zweiten Eingriffsabschnitt aufweist. Der zweite Eingriffsabschnitt ist parallel zu dem ersten Abschnitt ausgerichtet und erstreckt sich in einer entgegengesetzten Richtung zu dem ersten Eingriffsabschnitt. Der zweite Eingriffsabschnitt greift in die zweite Aussparung ein. Bei Versagen und/oder Lösen der dritten lösbaren Verbindung liegt eine zweite Anschlagsfläche des zweiten Eingriffsabschnitts, die an einem freien Ende des zweiten Eingriffsabschnitts angeordnet ist, auf einem Grund der zweiten Aussparung auf. Dadurch wird ein Abrutschen des Sicherungselements von den Bauteilen in teilmontiertem Zustand zuverlässig vermieden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- FIG 1: eine perspektivische Ansicht eines Verliersicherungssystems mit einem Sicherungselement gemäß einer ersten Ausführungsform;
- FIG 2: eine erste Seitenansicht auf das in FIG 1 gezeigte Verliersicherungssystem;
- FIG 3: eine zweite Seitenansicht auf das Sicherungselement des in den FIGN 1 und 2 gezeigten Verliersicherungssystems;
- FIG 4: eine Draufsicht auf das in den FIGN 1 bis 3 gezeigte Sicherungselement;
- FIG 5: eine Unteransicht auf das in den FIGN 1 bis 4 gezeigte Sicherungselement;
- FIG 6: eine Vorderansicht auf das in den FIGN 1 bis 5 gezeigte Sicherungselement;
- FIG 7: eine Vorderansicht auf eine zweite Ausführungsform des Sicherungselements;
- FIG 8: eine Vorderansicht auf eine dritte Ausführungsform des Sicherungselements;
- FIG 9: eine erste Seitenansicht auf die dritte Ausführungsform des Sicherungselements;
- FIG 10: eine Draufsicht auf die dritte Ausführungsform des Sicherungselements.

In allen Figuren wird auf ein Koordinatensystem mit einer x-Achse, einer y-Achse und einer z-Achse bezuggenommen. Das Koordinatensystem ist als Rechtssystem ausgebildet.

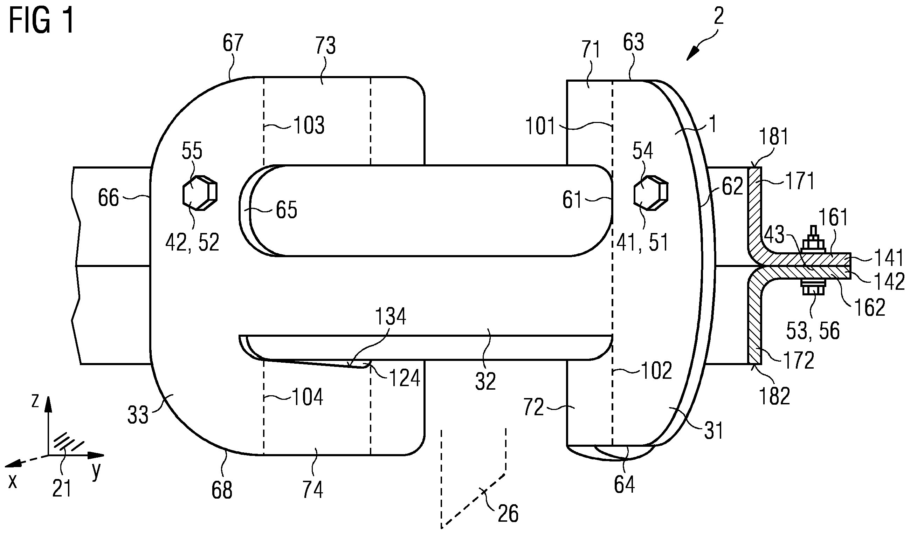

FIG 1 zeigt eine dreidimensionale Ansicht eines Ausschnitts eines als Verliersicherungssystem 2 ausgebildeten Schienenfahrzeugs mit einem Sicherungselement 1, einem ersten Bauteil 141 und einem zweiten Bauteil 142.

Das erste Bauteil 141 kann beispielsweise ein Sandkasten sein. Sandkästen werden bei Schienenfahrzeugen typischerweise im Unterflurbereich montiert, wobei der Sand verwendet wird, um die Reibung bei einer Notbremsung des Schienenfahrzeugs zu erhöhen. Das zweite Bauteil 142 kann beispielsweise ein Sandkastendeckel sein. Das zweite Bauteil 142 ist unterseitig des ersten Bauteils 141 angeordnet. Selbstverständlich kann das erste Bauteil 141 und/oder das zweite Bauteil 142 eine andere unterflur angeordnete Komponente des Schienenfahrzeugs 2 sein.

In FIG 1 sind das erste Bauteil 141 und das zweite Bauteil 142 aus Übersichtlichkeitsgründen nur abschnittsweise dargestellt. Auch ist nur ein Sicherungselement 1 dargestellt. Es ist auch möglich, dass eine Mehrzahl von Sicherungselementen 1 zum Sichern des zweiten Bauteils 142 gegen ein Herabfallen verwendet wird. Die Anzahl der zum Sichern des zweiten Bauteils 142 notwendigen Sicherungselemente 1 kann beispielsweise von der Größe und der Masse des zu sichernden zweiten Bauteils 142 abhängen.

Das erste Bauteil 141 weist einen ersten Halteabschnitt 161 und einen ersten Eingriffsabschnitt 171 auf. Der erste Eingriffsabschnitt 171 ist mit dem ersten Halteabschnitt 161 verbunden. Der erste Eingriffsabschnitt 171 und der erste Halteabschnitt 161 sind plattenförmig ausgebildet.

Das zweite Bauteil 142 weist einen zweiten Halteabschnitt 162 und einen mit dem zweiten Halteabschnitt 162 verbundenen zweiten Eingriffsabschnitt 172 auf. Der zweite Eingriffsabschnitt 172 und der zweite Halteabschnitt 162 sind plattenförmig ausgebildet. Die Halteabschnitte 161, 162 sind schräg, bevorzugt senkrecht, zu den Eingriffsabschnitten 171, 172 ausgebildet.

Der erste Eingriffsabschnitt 171 und der zweite Eingriffsabschnitt 172 sind beispielhaft jeweils parallel zur z-Achse ausgerichtet. Der zweite Eingriffsabschnitt 172 erstreckt sich in einer entgegengesetzten Richtung zum ersten Eingriffsabschnitt 171. Der zweite Eingriffsabschnitt 172 des zweiten Bauteils 142 kann aber auch entfallen. In diesem Fall weist das zweite Bauteil 142 lediglich den zweiten Halteabschnitt 162 auf.

Der erste und der zweite Eingriffsabschnitt 171, 172 weisen jeweils eine erste und eine zweite Anschlagsfläche 181, 182 auf. Die Anschlagsflächen 181, 182 sind jeweils an einem freien Ende der Eingriffsabschnitte 171, 172 angeordnet und sind parallel zu den Halteabschnitten 161, 162 ausgerichtet.

Das Sicherungselement 1 weist einen ersten Abschnitt 31, einen zweiten Abschnitt 32 und einen dritten Abschnitt 33 auf. Der erste Abschnitt 31 ist in Form einer länglichen Platte ausgebildet und erstreckt sich in einer ersten Ebene 21. Eine erste lange Seite 61 und eine zweite lange Seite 62 des ersten Abschnitts 31 verlaufen beispielhaft parallel zur z-Achse. Eine erste kurze Seite 63 und eine zweiten kurze Seite 64 sind in y-Richtung gegenüberliegend angeordnet und verbinden die beiden langen Seiten 61, 62 des ersten Abschnitts 31 miteinander.

In dem ersten Abschnitt 31 ist eine erste Durchgangsöffnung 41 angeordnet. Die erste Durchgangsöffnung 41 kann als Bohrung ausgebildet sein. Der erste Abschnitt 31 kann auch eine Mehrzahl erster Durchgangsöffnungen 41 aufweisen.

Der zweite Abschnitt 32 und der dritte Abschnitt 33 sind jeweils in Form einer länglichen Platte ausgebildet. Der zweite Abschnitt 32 und der dritte Abschnitt 33 erstrecken sich in der ersten Ebene 21. Der dritte Abschnitt 33 und der erste Abschnitt 31 sind in y-Richtung versetzt zueinander angeordnet. Im dargestellten Beispiel der FIG 1 sind der erste Abschnitt 31 und der dritte Abschnitt 33 beispielhaft parallel zueinander ausgerichtet. Der zweite Abschnitt 32 ist geneigt, vorzugsweise senkrecht, zu dem ersten Abschnitt 31 und/oder zu dem dritten Abschnitt 33 angeordnet. Der zweite Abschnitt 32 ist zwischen dem ersten Abschnitt 31 und dem dritten Abschnitt 33 angeordnet und verbindet den ersten Abschnitt 31 mit dem dritten Abschnitt 33. In z-Richtung ist der zweite Abschnitt 32 schlanker ausgebildet als der erste Abschnitt 31 und der dritte Abschnitt 33.

Der dritte Abschnitt 33 weist mindestens eine zweite Durchgangsöffnung 42 auf. Die zweite Durchgangsöffnung 42 ist als Bohrung ausgebildet und erstreckt sich in x-Richtung durch den dritten Abschnitt 33. Die erste Durchgangsöffnung 41 und die zweite Durchgangsöffnung 42 sind beispielhaft identisch ausgebildet und sind in z-Richtung auf gleicher Höhe angeordnet sowie verlaufen parallel. Der dritte Abschnitt 33 kann auch eine Mehrzahl zweiter Durchgangsöffnungen 42 aufweisen.

Ferner sind im ersten Eingriffsabschnitt 171 eine dritte Durchgangsöffnung und eine vierte Durchgangsöffnung angeordnet. In FIG 1 sind die dritte und die vierte Durchgangsöffnung durch das Sicherungselement 1 verdeckt. Die dritte Durchgangsöffnung fluchtet mit der ersten Durchgangsöffnung 41 und die zweite Durchgangsöffnung 42 fluchtet mit vierten Durchgangsöffnung.

Das Verliersicherungssystem 2 weist ferner eine erste lösbare Verbindung 51 und vorzugsweise eine zweite lösbare Verbindung 52 auf. Die erste und/oder zweite lösbare Verbindung 51, 52 ist als Schraubverbindung ausgebildet. Eine erste Schraube 54 der ersten lösbaren Verbindung 51 durchgreift die erste Durchgangsöffnung 41 und dritte Durchgangsöffnung. Eine zweite Schraube 55 durchgreift die zweite Durchgangsöffnung 42 und die vierte Durchgangsöffnung. Die lösbare Verbindung 51, 52 befestigt das Sicherungselement 1 am ersten Eingriffsabschnitt 171 lösbar. Auch ist eine andere Ausgestaltung der lösbaren Verbindung 51, 52 denkbar.

Das Sicherungselement 1 weist ferner eine erste Lasche 71, eine zweite Lasche 72, eine dritte Lasche 73 und eine vierte Lasche 74 auf. Dabei sind die erste Lasche 71 mit einem ersten festen Ende 101 und die zweite Lasche 72 mit einem zweiten festen Ende 102 in z-Richtung gegenüberliegend mit der ersten langen Seite 61 des ersten Abschnitts 31 verbunden. Die zweite lange Seite 62 des ersten Abschnitts 31 ist frei. Die erste Lasche 71 ist beispielhaft angrenzend an die erste kurze Seite 63 des ersten Abschnitts 31 angeordnet. Die zweite Lasche 72 ist angrenzend an die zweite kurze Seite 64 des ersten Abschnitts 31 angeordnet. Der zweite Abschnitt 32 ist beispielweise in mittiger Lage zwischen der ersten Lasche 71 und der zweiten Lasche 72 beabstandet zu der ersten und zweiten Lasche 71, 72 angeordnet.

Der dritte Abschnitt 33 ist beispielhaft spiegelsymmetrisch bezogen auf eine erste Symmetrieebene 26 zum ersten Abschnitt 31 ausgebildet. Eine erste lange Seite 65 und eine zweite lange Seite 66 des dritten Abschnitts 33 verlaufen beispielhaft parallel zur z-Achse. Eine erste kurze Seite 67 und eine zweiten kurze Seite 68 des dritten Abschnitts 33 sind in z-Richtung gegenüberliegend angeordnet und verbinden die beiden langen Seiten 65, 66 des dritten Abschnitts 33 miteinander. Die erste kurze Seite 67 des dritten Abschnitts 33 ist beispielhaft auf gleicher Höhe in z-Richtung angeordnet wie die erste kurze Seite 63 des ersten Abschnitts 31. Die zweite kurze Seite 68 des dritten Abschnitts 33 ist beispielhaft auf gleicher Höhe in z-Richtung angeordnet wie die zweite kurze Seite 64 des ersten Abschnitts 31. Die erste lange Seite 61 des ersten Abschnitts 31 und die erste lange Seite 65 des dritten Abschnitts 65 sind auf einander zugewandten Seiten des ersten Abschnitts 31 und dritten Abschnitts 33 angeordnet. Die zweite lange Seite 62 des ersten Abschnitts 31 und die zweite lange Seite 65 des dritten Abschnitts 65 sind auf einander abgewandten Seiten des ersten und dritten Abschnitts 31, 33 angeordnet.

Die dritte Lasche 73 ist mit einem dritten festen Ende 103 und die vierte Lasche 74 mit einem vierten festen Ende 104 in z-Richtung gegenüberliegend mit der ersten langen Seite 65 des dritten Abschnitts 33 verbunden. Die zweite lange Seite 66 des dritten Abschnitts 33 ist frei. Die dritte Lasche 73 ist angrenzend an die erste kurze Seite 67 des dritten Abschnitts 33 angeordnet. Die vierte Lasche 74 ist angrenzend an die zweite kurze Seite 68 des dritten Abschnitts 33 angeordnet.

Alle Laschen 71, 72, 73, 74 ragen aus der ersten Ebene 21 auf eine gemeinsame und Bauteilen 141, 142zugewandte Seite des ersten und des dritten Abschnitts 31, 33.

Das Sicherungselement 1 weist ein Metall, beispielsweise Eisen oder Stahl, auf. Das Sicherungselement 1 kann beispielsweise aus einem Blech mittels eines Stanz-Biegeverfahrens geformt werden. Das Sicherungselement 1 kann aber auch durch Verschweißen einzelner Komponenten und/oder mittels eines spanenden Verfahrens hergestellt werden.

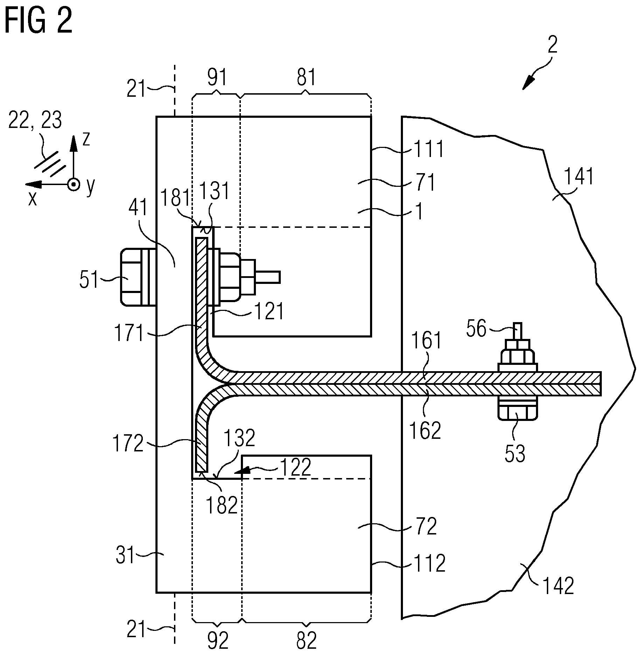

FIG 2 zeigt eine erste Seitenansicht auf das in FIG 1 gezeigte Verliersicherungssystem. Dabei sind in der Seitenansicht lediglich die erste und die zweite Lasche 71, 72 zu erkennen, da diese die dritte und die vierte Lasche 73, 74 verdecken.

Die erste Lasche 71 weist eine erste Aussparung 121 auf. Die erste Aussparung 121 ist schlitzförmig ausgebildet und weist einen ersten Aussparungsgrund 131 auf. Der erste Aussparungsgrund 131 ist korrespondierend zur ersten Anschlagsfläche 181 ausgebildet und in der Ausführungsform beispielhaft plan ausgebildet. Der erste Aussparungsgrund 131 ist beabstandet zu der ersten Anschlagsfläche 181 angeordnet. Die erste Aussparung 121 ist auf einer zur zweiten Lasche 72 zugewandten Seite der ersten Lasche 71 angeordnet und zur zweiten Lasche 72 hin geöffnet. In der Darstellung der FIG 2 weist die erste Aussparung 121 einen rechteckigen Querschnitt auf und grenzt an den ersten Abschnitt 31 an. In die erste Aussparung 121 greift der erste Eingriffsabschnitt 171 des ersten Bauteils 141 abschnittsweise ein. Die erste Aussparung 121 kann aber auch entfallen.

Die zweite Lasche 72 weist eine zweite Aussparung 122 auf. Die zweite Aussparung 122 ist schlitzförmig ausgebildet und weist einen zweiten Aussparungsgrund 132 auf. Der zweite Aussparungsgrund 132 ist korrespondierend zur zweiten Anschlagsfläche 182 ausgebildet und in der Ausführungsform beispielhaft plan ausgebildet. Der zweite Aussparungsgrund 132 ist beabstandet zu der zweiten Anschlagsfläche 182 angeordnet. Die zweite Aussparung 122 ist auf einer zur ersten Lasche 71 zugewandten Seite der zweiten Lasche 72 angeordnet und zur ersten Lasche 71 hin geöffnet. In der Darstellung der FIG 2 weist die zweite Aussparung 122 einen rechteckigen Querschnitt auf und grenzt an den ersten Abschnitt 31 an. In die zweite Aussparung 122 greift der zweite Eingriffsabschnitt 172 der zweiten Halterung 152 des zweiten Bauteils 142 ein.

In FIG 2 ist die erste Aussparung 121 in z-Richtung beispielhaft länger ausgebildet als die zweite Aussparung 122, während beispielhaft die zweite Aussparung 122 entlang der x-Achse breiter ausgebildet ist als die erste Aussparung 121. Auch können die Aussparungen 121, 122 andersartig ausgebildet sein.

Die erste Lasche 71 weist einen ersten Laschenbereich 81 und einen ersten Bogenbereich 91 auf. Die zweite Lasche 72 weist einen zweiten Laschenbereich 82 und eine zweiten Bogenbereich 92 auf. Der erste Laschenbereich 81 grenzt an ein erstes freies Ende 111 der ersten Lasche 71 an und der zweite Laschenbereich 82 grenzt an ein zweites freies Ende 112 der zweiten Lasche 72 an. Der Bogenbereich 92, 94 ist beispielhaft als Viertelkreisbogen ausgebildet. Der erste Bogenbereich 91 verbindet den ersten Laschenbereich 81 mit dem ersten Abschnitt 31. Der zweite Bogenbereich 92 verbindet den zweiten Laschenbereich 82 mit dem ersten Abschnitt 31. Der erste Bogenbereich 91 und der zweite Bogenbereich 94 können aber auch entfallen. In diesem Fall sind der erste Laschenbereich 81 und der zweite Laschenbereich 82 unmittelbar mit dem ersten Abschnitt 31 verbunden.

Der erste Laschenbereich 81 ist plan ausgebildet und erstreckt sich in einer zweiten Ebene 22. Der zweite Laschenbereich 82 ist plan ausgebildet und erstreckt sich in einer dritten Ebene 23. Die zweite und die dritte Ebene 22, 23 sind jeweils in einer ersten Richtung 11 parallel zum ersten Abschnitt 31 ausgerichtet und in einer zweiten Richtung 12 geneigt, vorzugweise senkrecht, zu dem ersten Abschnitt 31 angeordnet. Die erste Richtung 11 ist parallel zur z-Achse orientiert. Die zweite Richtung 12 ist parallel zur x-Achse orientiert, wenn die zweite und die dritte Ebene 22, 23 senkrecht zum ersten Abschnitt 31 orientiert sind, was in FIG 2 der Fall ist. Wichtig ist jedoch, um eine hohe Festigkeit des Sicherungselements 1 sicherzustellen, dass die Laschenbereiche 81, 82 wie oben beschrieben zu dem ersten Abschnitt 31 stehend ausgerichtet sind, d.h. dass eine Erstreckung des Laschenbereichs 81, 82 in z-Richtung höher ist als eine Dicke des Laschenbereichs 81, 82 in y-Richtung.

Der erste und der zweite Halteabschnitt 161, 162 sind aneinander gedrückt und mittels einer dritten lösbaren Verbindung 53 miteinander verbunden. Die dritte lösbare Verbindung 53 kann beispielsweise eine auf Zug belastete Schraubverbindung mit einer dritten Schraube 56 sein.

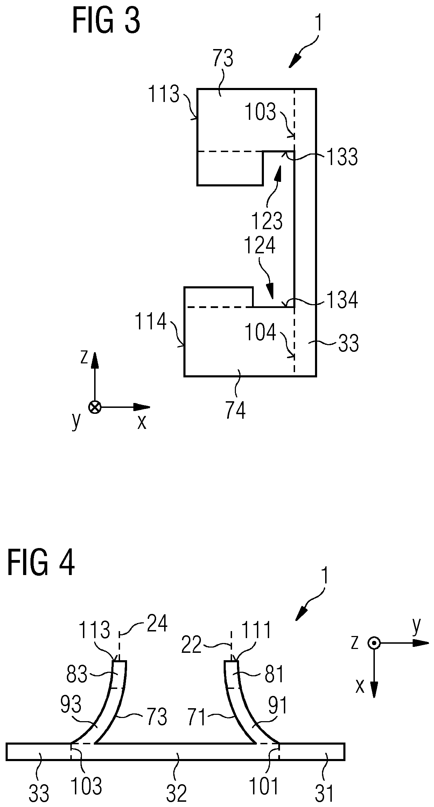

FIG 3 zeigt eine zweite Seitenansicht auf das in den FIGN 1 und 2 gezeigte Sicherungselement 1 des Verliersicherungssystems 2.

Die dritte Lasche 73 weist eine dritte Aussparung 123 auf. Die dritte Aussparung 123 ist schlitzförmig ausgebildet und weist einen dritten Aussparungsgrund 133 auf. Der dritte Aussparungsgrund 133 ist korrespondierend zur ersten Anschlagsfläche 181 ausgebildet und in der Ausführungsform beispielhaft plan ausgebildet. Der dritte Aussparungsgrund 133 ist beabstandet zu der ersten Anschlagsfläche 181 angeordnet. Die dritte Aussparung 123 ist auf einer zur vierten Lasche 74 zugewandten Seite der dritten Lasche 73 angeordnet und zur vierten Lasche 74 hin geöffnet. In der Darstellung der FIG 3 weist die dritte Aussparung 123 einen rechteckigen Querschnitt auf und grenzt an den dritten Abschnitt 33 an. In die dritte Aussparung 123 greift der erste Eingriffsabschnitt 171 des ersten Bauteils 141 abschnittsweise ein. Die dritte Aussparung 123 kann aber auch entfallen. In diesem Fall ist die dritte Lasche 73 lediglich dazu ausgebildet, auf dem ersten Bauteil 141 aufzuliegen, statt es zumindest abschnittsweise in der dritten Aussparung 123 aufzunehmen.

Die vierte Lasche 74 weist eine vierte Aussparung 124 auf. Die vierte Aussparung 124 ist schlitzförmig ausgebildet und weist einen vierten Aussparungsgrund 134 auf. Der vierte Aussparungsgrund 134 ist korrespondierend zur zweiten Anschlagsfläche 182 ausgebildet und in der Ausführungsform beispielhaft plan ausgebildet. Der vierte Aussparungsgrund 134 ist beabstandet zu der zweiten Anschlagsfläche 182 angeordnet. Die vierte Aussparung 124 ist auf einer zur dritten Lasche 73 zugewandten Seite der vierten Lasche 74 angeordnet und zur dritten Lasche 73 hin geöffnet. In der Darstellung der FIG 3 weist die vierte Aussparung 124 einen rechteckigen Querschnitt auf und befindet sich am dritten Abschnitt 31. In die vierte Aussparung 124 greift der zweite Eingriffsabschnitt 172 der zweiten Halterung 152 des zweiten Bauteils 142 ein.

In FIG 3 ist die dritte Aussparung 123 in z-Richtung beispielhaft länger ausgebildet als die vierte Aussparung 124, während beispielhaft die vierte Aussparung 124 entlang der x-Achse breiter ausgebildet ist als die dritte Aussparung 123. Ferner sind in z-Richtung die dritte Aussparung 123 und die erste Aussparung gleich tief ausgebildet, wobei der erste Aussparungsgrund und der dritte Aussparungsgrund 133 in einer gemeinsamen xy-Ebene angeordnet sind. Ferner sind in z-Richtung die zweite Aussparung und die vierte Aussparung 124 gleich tief ausgebildet, wobei der zweite Aussparungsgrund und der vierte Aussparungsgrund 134 in einer gemeinsamen weiteren xy-Ebene angeordnet sind. Auch können die Aussparungen 123, 124 andersartig ausgebildet sein.

FIG 4 zeigt eine Draufsicht auf das in den FIGN 1 bis 4 gezeigte Sicherungselement 1 entlang der z-Achse.

Die dritte Lasche 73 weist einen dritten Laschenbereich 83 und eine dritten Bogenbereich 93 auf. Der dritte Laschenbereich 83 grenzt an ein drittes freies Ende 113 der dritten Lasche 73 an. Der erste und der dritte Bogenbereich 91, 93 sind beispielhaft als Viertelkreisbögen ausgebildet. Der dritte Bogenbereich 93 verbindet den dritten Laschenbereich 83 mit dem dritten Abschnitt 33. Der dritte Bogenbereich 93 kann aber auch entfallen. In diesem Fall ist der dritte Laschenbereich 83 unmittelbar mit dem dritten Abschnitt 33 verbunden.

Der dritte Laschenbereich 83 ist plan ausgebildet und erstreckt sich in einer vierten Ebene 24. Die vierte Ebene 24 ist in einer ersten Richtung 11 parallel zum dritten Abschnitt 33 ausgerichtet und in einer zweiten Richtung 12 geneigt, vorzugweise senkrecht, zu dem ersten Abschnitt 31 angeordnet. Die erste Richtung 11 ist parallel zur z-Achse orientiert. Die zweite Richtung 12 ist parallel zur x-Achse orientiert, wenn die vierte Ebene 24 senkrecht zum dritten Abschnitt 33 orientiert ist. Wichtig ist jedoch, um eine hohe Festigkeit des Sicherungselements 1 sicherzustellen, dass der Laschenbereich83 wie oben beschrieben zu dem dritten Abschnitt 33 stehend ausgerichtet ist, d.h. dass eine Erstreckung des Laschenbereichs 83 in z-Richtung höher ist als eine Dicke des Laschenbereichs 83 in y-Richtung.

Die zweite Ebene 22 und die dritte Ebene überlappen sich in der Ausführungsform des Sicherungselements 1, weshalb der zweite Laschenbereich in FIG 4 nicht zu sehen ist, da er vom ersten Laschenbereich 81 verdeckt wird. Die zweite und die dritte Ebene 22 können aber auch parallel und versetzt zueinander oder geneigt zueinander ausgebildet sein, sodass die zweite Ebene 22 und die dritte Ebene einander schneiden.

Die vierte Ebene 24 und die fünfte Ebene überlappen sich in der Ausführungsform, weshalb der vierte Laschenbereich in FIG 4 nicht zu sehen ist, da er vom dritten Laschenbereich 83 verdeckt wird. Die vierte und die fünfte Ebene 24 können aber auch parallel und versetzt oder geneigt zueinander ausgerichtet sein, sodass die vierte Ebene 24 und die fünfte Ebene einander schneiden.

Bei Versagen und/oder Lösen(beabsichtigt oder unbeabsichtigt) der dritten lösbaren Verbindung 53 fällt das zweite Bauteil 142 soweit herunter, bis die zweite Anschlagsfläche 182 des zweiten Eingriffsabschnitts 172 auf dem zweiten Aussparungsgrund 132 der zweiten Aussparung 122 und auf dem vierten Aussparungsgrund 134 der vierten Aussparung 124 aufliegt.

In einer Weiterbildung der in FIGN 1 bis 6 gezeigten Ausführungsform können die erste Aussparung 121 und die dritte Aussparung 123 aber auch entfallen. In diesem Fall liegt das zweite Bauteil 142 auf der zweiten Lasche 72 und der vierten Lasche 74 auf.

Bei einer gewichtsoptimierten Auslegung des Verliersicherungssystems 2 werden bei Versagen der dritten lösbaren Verbindung 53 die Schrauben 54, 55 der ersten und zweiten lösbaren Verbindung 51, 52 abgeschert, so dass die erste Anschlagsfläche 181 des ersten Eingriffsabschnitts 171 auf dem ersten Aussparungsgrund 131 und dem dritten Aussparungsgrund 133 aufliegt.

In einer Weiterbildung der in den FIGN 1 bis 6 gezeigten Ausführungsform können die erste Aussparung 121 und die dritte Aussparung 123 aber auch entfallen. In diesem Fall liegen die erste Lasche 71 und die dritte Lasche 73 auf dem ersten Bauteil 141 auf.

Die Montage des Sicherungselements 1 erfolgt, indem das Sicherungselement 1 seitlich auf den ersten Eingriffsabschnitt 171 und, falls vorhanden, auf den zweiten Eingriffsabschnitt 172 geschoben wird, sodass das erste Bauteil 141 und das zweite Bauteil 142 zwischen der ersten und der dritten Lasche 71, 73 und der zweiten und der vierten Lasche 72, 74 zumindest abschnittweise angeordnet sind. Auch können die Aussparungen 121, 122, 123 ,124 so ausgebildet sein, dass das Sicherungselement in einer Dreh-Kippbewegung (um die y-Achse) auf die Eingriffsabschnitte 171, 172 aufgebracht werden kann. Dadurch ist das zweite Bauteil 142 bereits provisorisch fixiert. Ein Monteur kann anschließend alleine (ohne weitere Hilfe durch einen weiteren Monteur) die lösbaren Verbindungen 51, 52, 53 anbringen und das zweite Bauteil 142 am ersten Bauteil 141 befestigen.

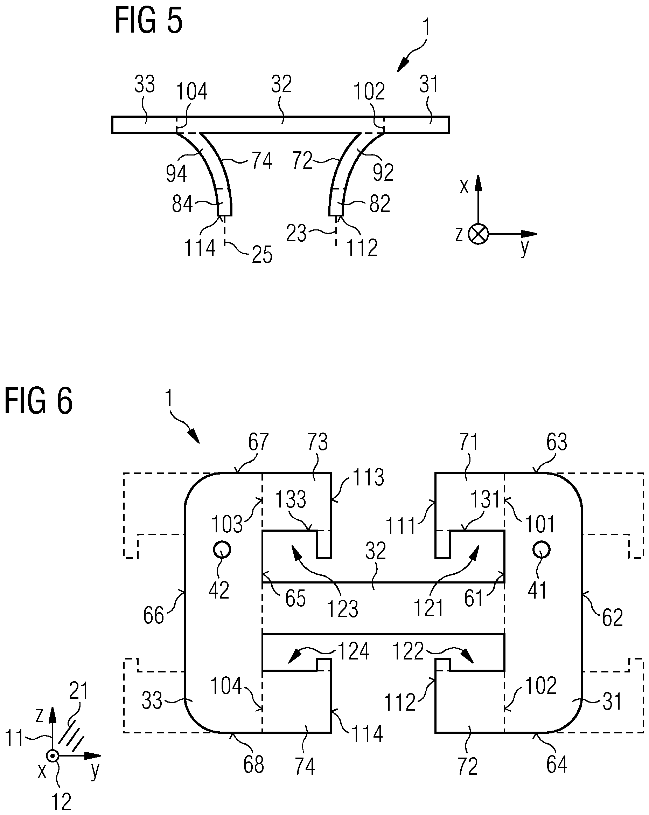

FIG 5 zeigt eine Unteransicht auf das in den FIGN 1 bis 3 gezeigte Sicherungselement 1 entlang der z-Achse.

Die vierte Lasche 74 weist einen vierten Laschenbereich 84 und eine vierten Bogenbereich 94 auf. Der vierte Laschenbereich 84 grenzt an ein viertes freies Ende 114 der vierten Lasche 74 an. Der zweite und der vierte Bogenbereich 92, 94 sind beispielhaft als Viertelkreisbögen ausgebildet. Der vierte Bogenbereich 94 verbindet den vierten Laschenbereich 84 mit dem dritten Abschnitt 33. Der vierte Bogenbereich 94 kann aber auch entfallen. In diesem Fall ist der vierte Laschenbereich 84 unmittelbar mit dem dritten Abschnitt 33 verbunden.

Der zweite Laschenbereich 82 ist plan ausgebildet und erstreckt sich in einer dritten Ebene 23. Der vierte Laschenbereich 84 ist plan ausgebildet und erstreckt sich in einer fünften Ebene 25. Die dritte und die fünfte Ebene 23, 25 sind jeweils in einer ersten Richtung 11 parallel zum ersten Abschnitt 31 ausgerichtet und in einer zweiten Richtung 12 geneigt, vorzugweise senkrecht, zu dem ersten Abschnitt 31 angeordnet. Die erste Richtung 11 ist parallel zur z-Achse orientiert. Die zweite Richtung 12 ist parallel zur x-Achse orientiert, wenn die dritte und die fünfte Ebene 23, 25 senkrecht zum ersten Abschnitt 31 orientiert sind. Wichtig ist jedoch, um eine hohe Festigkeit des Sicherungselements 1 sicherzustellen, dass die Laschenbereiche 82, 84 wie oben beschrieben zu dem ersten und dritten Abschnitt 31, 33 stehend ausgerichtet sind, d.h. dass eine Erstreckung des Laschenbereichs 82, 84 in z-Richtung höher ist als eine Dicke des Laschenbereichs 82, 84 in y-Richtung.

FIG 6 zeigt eine Vorderansicht auf das in den FIGN 1 bis 5 gezeigte Sicherungselement 1 entlang der x-Achse.

In y-Richtung sind die Aussparungen 121, 122, 123, 124 gleich breit ausgebildet. Selbstverständlich ist auch eine unterschiedliche Ausgestaltung der Aussparungen 121, 122, 123, 124 denkbar.

Eine Weiterbildung der in den FIGN 1 bis 5 gezeigten Ausführungsform ist mittels gestrichelt gezeichneter Linien angedeutet. Die erste Lasche 71 und die zweite Lasche 72 müssen nicht gemeinsam an der ersten langen Seite 61 des ersten Abschnitts 31 angeordnet sein. Die erste Lasche 71 kann auch an der ersten langen Seite 61 und die zweite Lasche 72 kann an der zweiten langen Seite 62 des ersten Abschnitts 31 angeordnet sein. Auch eine umgekehrte Anordnung ist möglich, sodass die erste Lasche 71 an der zweiten langen Seite 62 und die zweite Lasche 72 an der ersten langen Seite 61 des ersten Abschnitts 31 angeordnet sind. Auch können die erste Lasche 71 und die zweite Lasche 72 gemeinsam an der zweiten langen Seite 62 (auf einer zum zweiten Abschnitt 32 abgewandten Seite) des ersten Abschnitts 31 angeordnet sein.

Die dritte Lasche 73 und die vierte Lasche 74 müssen nicht gemeinsam an der ersten langen Seite 65 des dritten Abschnitts 33 angeordnet sein. Die dritte Lasche 73 kann auch an der ersten langen Seite 65 und die vierte Lasche 74 kann an der zweiten langen Seite 66 des dritten Abschnitts 33 angeordnet sein. Auch eine umgekehrte Anordnung ist möglich, sodass die dritte Lasche 73 an der zweiten langen Seite 66 und die vierte Lasche 74 an der ersten langen Seite 65 des dritten Abschnitts 33 angeordnet sind. Auch können die dritte Lasche 73 und die vierte Lasche 74 gemeinsam an der zweiten langen Seite 66 (auf einer zum zweiten Abschnitt 32 abgewandten Seite) des dritten Abschnitts 33 angeordnet sein.

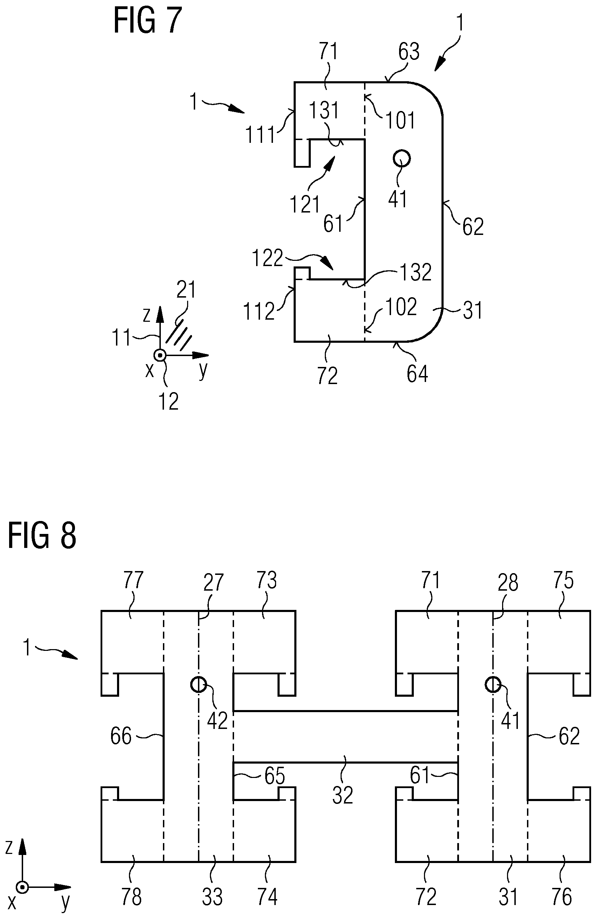

FIG 7 zeigt eine Vorderansicht auf eine zweite Ausführungsform eines Sicherungselements 1. Sofern nicht weiter erwähnt ist das Sicherungselement 1 identisch zu dem in den FIGN 1 bis 6 beschriebenen Sicherungselement 1 ausgebildet.

In dieser Ausführungsform weist das Sicherungselement 1 lediglich den ersten Abschnitt 31 auf, während auf den zweiten und dritten Abschnitt 32, 33 verzichtet wird. Ferner weist das Sicherungselement 1 der zweiten Ausführungsform nur die erste und die zweite Lasche 71, 72 auf. Obwohl nicht zwingend erforderlich, weisen die erste Lasche 71 und die zweite Lasche 72 in der Darstellung der FIG 7 jeweils die erste und die zweite Aussparung 121, 122 auf.

Durch den Verzicht auf den zweiten und dritten Abschnitt 32, 33 ist die erste lange Seite 61 zwischen ersten Lasche 71 und der zweiten Lasche 72 unterbrechungsfrei plan ausgebildet. Diese Ausgestaltung ist besonders kompakt und eignet sich insbesondere zur Sicherung von Bauteilen 141, 142 bei einer beengten Bauraumsituation.

FIG 8 zeigt eine Vorderansicht auf ein Sicherungselement 1 gemäß einer dritten Ausführungsform.

Die in den FIG 8 dargestellte dritte Ausführungsform des Sicherungselements 1 ist, sofern nicht anders erläutert, identisch zu dem in den FIG 1 bis 6 gezeigten Sicherungselement 1 ausgebildet.

Das Sicherungselement 1 weist beispielhaft insgesamt acht Laschen 71 - 78 auf. Neben der ersten bis vierten Lasche 71, 72, 73, 74 weist das Sicherungselement 1 beispielhaft eine fünfte bis achte Lasche 75, 76, 77, 78 auf. Die Anzahl der Laschen 71 -78 ist frei wählbar, sollte jedoch nicht geringer sein als in FIG 7 erläutert.

Die erste bis vierte Lasche 71, 72, 73, 74 sind jeweils gemäß der ersten Ausführungsform des Sicherheitselements 1 ausgebildet und angeordnet.

Die siebte Lasche 77 ist in y-Richtung der dritten Lasche 73 gegenüberliegend und zur dritten Lasche 73 spiegelsymmetrisch bezogen auf eine zweite Symmetrieebenen 27 angeordnet, wobei die zweite Symmetrieebene 27 mittig zwischen der ersten langen Seite 65 und der zweiten langen Seite 66 des dritten Abschnitts 33 ausgebildet ist. Die achte Lasche 78 ist in y-Richtung der vierten Lasche 74 gegenüberliegend angeordnet und zur vierten Lasche 74 spiegelsymmetrisch bezogen auf die zweite Symmetrieebene 27 ausgebildet. In z-Richtung sind die siebte und achte Lasche 77, 78 gegenüberliegend gemeinsam an der zweiten langen Seite 65 des dritten Abschnitts 33 angeordnet.

Die fünfte Lasche 75 ist in y-Richtung der ersten Lasche 71 gegenüberliegend und zur ersten Lasche 71 spiegelsymmetrisch bezogen auf eine dritte Symmetrieebenen 28 angeordnet, wobei die dritte Symmetrieebene 28 mittig zwischen der ersten langen Seite 61 und der zweiten langen Seite 62 des ersten Abschnitts 31 ausgebildet ist. Die sechste Lasche 76 ist in y-Richtung der zweiten Lasche 72 gegenüberliegend angeordnet und zur zweiten Lasche 72 spiegelsymmetrisch bezogen auf die dritte Symmetrieebene 28 ausgebildet. In z-Richtung sind die fünfte und sechste Lasche 75, 76 gegenüberliegend gemeinsam an der zweiten langen Seite 62 des ersten Abschnitts 31 angeordnet.

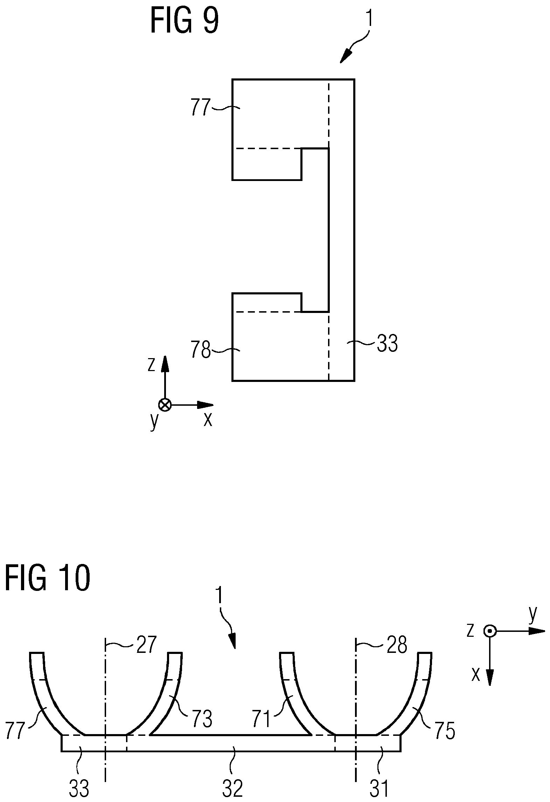

FIG 9 zeigt eine erste Seitenansicht auf das in FIG 8 gezeigte Sicherungselement 1.

Alle Laschen weisen in x-Richtung und in y-Richtung die gleiche Ausdehnung auf. Aus diesem Grund sind in der Darstellung der FIG 9 lediglich die siebte und die achte Lasche 77, 78 zu sehen, da sie alle anderen Laschen verdecken. Die siebte und die achte Lasche 77, 78 weisen in der beispielhaften Darstellung der FIG 9 jeweils eine Aussparung auf. Dies gilt auch für alle in FIG 9 verdeckten Laschen, wobei alle Aussparungen auch entfallen können.

FIG 10 zeigt eine Draufsicht auf das in den FIGN 8 und 9 gezeigte Sicherungselement 1.

Die fünfte und siebte Lasche 75, 77 weisen ebenfalls Laschenbereiche und Bogenbereiche auf, wobei die Laschenbereiche sich entlang von Ebenen erstrecken, die vorzugsweise parallel zu der zweiten, dritten, vierten und fünften Ebene 22, 24 verlaufen. Die Bogenbereiche können auch entfallen. Auch die sechste und die achte Lasche sind derart ausgebildet, was in FIG 10 nicht zu sehen ist, da die fünfte Lasche 75 die sechste Lasche bedeckt und die siebte Lasche 77 die achte Lasche bedeckt.

## Patentansprüche

1. Verliersicherungssystem (2),
- bei dem das Verliersicherungssystem (2) mindestens ein Sicherungselement (1), ein erstes Bauteil (141), ein zweites Bauteil (142) und wenigstens eine erste lösbare Verbindung (51) und eine dritte lösbare Verbindung (53) aufweist,
- bei dem das Sicherungselement (1) zum Sichern der beiden Bauteile (141, 142) des Schienenfahrzeugs (2) ausgebildet ist, wobei das Sicherungselement (1) einen ersten Abschnitt (31), eine erste Lasche (71) und eine zweite Lasche (72) aufweist, wobei der erste Abschnitt (31) in Form einer länglichen Platte ausgebildet ist und sich in einer ersten Ebene (21) erstreckt, wobei im ersten Abschnitt (31) mindestens eine erste Durchgangsöffnung (41) angeordnet ist, wobei die erste Durchgangsöffnung (41) ausgebildet ist, die erste lösbare Verbindung (51) zum Befestigen des Sicherungselements (1) am ersten Bauteil (141) zumindest abschnittsweise aufzunehmen, wobei der erste Abschnitt (31) eine lange Seite (61) aufweist, wobei die erste Lasche (71) und die zweite Lasche (72) an der langen Seite (61) des ersten Abschnitts (31) gegenüberliegend zueinander angeordnet sind und aus der ersten Ebene (21) auf eine gemeinsame Seite des ersten Abschnitts (31) ragen, wobei die erste Lasche (71) ausgebildet ist, oberseitig am ersten Bauteil (141) aufzuliegen und wobei die zweite Lasche (72) ausgebildet ist, das zweite Bauteil (141) unterseitig abzustützen und gegen ein Herabfallen zu sichern,
- bei dem die erste lösbare Verbindung (51) die erste Durchgangsöffnung (41) durchgreift und das Sicherungselement (1) am ersten Bauteil (141) befestigt,
- bei dem die dritte lösbare Verbindung (53) auf Zug belastet das erste Bauteil (141) mit dem zweiten Bauteil (142) verbindet,
- bei dem das erste Bauteil (141) und das zweite Bauteil (142) zwischen der ersten Lasche (71) und der zweiten Lasche (72) zumindest abschnittweise angeordnet sind,
- bei dem das zweite Bauteil (142) bei Versagen und/oder Lösen der dritten lösbaren Verbindung (53) auf der zweiten Lasche (72) aufliegt und die zweite Lasche (72) das zweite Bauteil (142) vor dem Herunterfallen sichert und die erste Lasche (71) bei Versagen und/oder Lösen der ersten lösbaren Verbindung (51) auf dem ersten Bauteil (141) aufliegt und das Sicherungselement (1) an dem ersten Bauteil (141) hält.

2. Verliersicherungssystem (2) gemäß Anspruch 1,
- bei dem das erste Bauteil (141) einen ersten Eingriffsabschnitt (171) aufweist,
- bei dem der erste Eingriffsabschnitt (171) parallel zum ersten Abschnitt (31) ausgerichtet ist,
- bei dem der erste Eingriffsabschnitt (171) in die erste Aussparung (121) eingreift,
- bei dem bei Versagen und/oder Lösen der dritten lösbaren Verbindung (53) eine erste Anschlagsfläche (181) des ersten Eingriffsabschnitts (171), die an einem freien Ende des ersten Eingriffsabschnitts (171) angeordnet ist, auf einem Grund (131) der ersten Aussparung (121) aufliegt.

3. Verliersicherungssystem (2) gemäß Anspruch 2,
- bei dem das zweite Bauteil (142) einen zweiten Eingriffsabschnitt (172) aufweist,
- bei dem der zweite Eingriffsabschnitt (172) parallel zum ersten Abschnitt (31) ausgerichtet ist und sich in einer entgegengesetzten Richtung zum ersten Eingriffsabschnitt (171) erstreckt,
- bei dem der zweite Eingriffsabschnitt (172) in die zweite Aussparung (122) eingreift,
- bei dem beim Versagen und/oder Lösen der dritten lösbaren Verbindung (53) eine zweite Anschlagsfläche (182) des zweiten Eingriffsabschnitts (172), die an einem freien Ende des zweiten Eingriffsabschnitts (172) angeordnet ist, auf einem Grund (132) der zweiten Aussparung (122) aufliegt.

4. Verliersicherungssystem (2) gemäß Anspruch 1,
- bei dem beim Sicherungselement (1) die erste Lasche (71) eine erste Aussparung (121) aufweist,
- bei dem die erste Aussparung (121) ausgebildet ist, das erste Bauteil (141) zumindest abschnittsweise aufzunehmen,
- bei dem die erste Lasche (71) mit einem ersten festen Ende (101) mit der langen Seite (61) des ersten Abschnitts (31) verbunden ist,
- bei dem die erste Aussparung (121) auf einer zur zweiten Lasche (72) zugewandten Seite der ersten Lasche (71) angeordnet ist und zur zweiten Lasche (72) hin geöffnet ist,
- bei dem die erste Aussparung (121) angrenzend an das feste Ende (101) angeordnet ist,
- bei dem die erste Aussparung (121) schlitzförmig ausgebildet ist.

5. Verliersicherungssystem (2) gemäß Anspruch 4,
- bei dem beim Sicherungselement (1) die zweite Lasche (72) eine zweite Aussparung (122) aufweist,
- bei dem die zweite Aussparung (122) ausgebildet ist, das zweite Bauteil (142) zumindest abschnittsweise aufzunehmen,
- bei dem die zweite Lasche (72) mit einem zweiten festen Ende (102) mit der langen Seite (61) des ersten Abschnitts (31) verbunden ist,
- bei dem die zweite Aussparung (122) angrenzend an das zweite feste Ende (102) angeordnet ist,
- bei dem die zweite Aussparung (122) schlitzförmig ausgebildet ist,
- bei dem die zweite Aussparung (122) auf einer zur ersten Lasche (71) zugewandten Seite der zweiten Lasche (72) angeordnet ist und zur ersten Lasche (71) hin geöffnet ist.

6. Verliersicherungssystem (2) gemäß einem der vorhergehenden Ansprüche,
- bei dem beim Sicherungselement (1) die erste Lasche (71) einen ersten Laschenbereich (81) und einen ersten Bogenbereich (91) aufweist und die zweite Lasche (72) einen zweiten Laschenbereich (82) und eine zweiten Bogenbereich (92) aufweist,
- bei dem der erste und der zweite Laschenbereich (81, 82) plattenförmig ausgebildet sind,
- bei dem sich der erste Laschenbereich (81) in einer zweiten Ebene (22) erstreckt und der zweite Laschenbereich (82) sich in einer dritten Ebene (23) erstreckt,
- bei dem die zweite und die dritte Ebene (22, 23) jeweils in einer ersten Richtung (11) parallel zum ersten Abschnitt (31) und in einer zweiten Richtung (12) senkrecht geneigt zum ersten Abschnitt (31) angeordnet sind,
- bei dem der erste Laschenbereich (81) an ein erstes freies Ende (111) angrenzt und der zweite Laschenbereich (82) an ein zweites freies Ende (112) angrenzt,
- bei dem der erste Bogenbereich (91) den ersten Laschenbereich (81) mit dem ersten Abschnitt (31) verbindet und der zweite Bogenbereich (92) den zweiten Laschenbereich (82) mit dem ersten Abschnitt (31) verbindet.

7. Verliersicherungssystem (2) nach Anspruch 6, bei dem beim Sicherungselement (1) sich die zweite Ebene (22) und die dritte Ebene (23) überlappen oder die zweite Ebene (22) parallel zu der dritten Ebene (23) ausgebildet ist.

8. Verliersicherungssystem (2) nach einem der vorhergehenden Ansprüche,
- bei dem das Sicherungselement (1) einen zweiten Abschnitt (32), einen dritten Abschnitt (33), eine dritte Lasche (73) und eine vierte Lasche (74) aufweist,
- bei dem der zweite Abschnitt (32) und der dritte Abschnitt (33) jeweils in Form einer länglichen Platte ausgebildet sind,
- bei dem sich der zweite Abschnitt (32) und der dritte Abschnitt (33) in der ersten Ebene (21) erstrecken,
- bei dem der dritte Abschnitt (33) und der erste Abschnitt (31) versetzt zueinander angeordnet sind,
- bei dem der zweite Abschnitt (32) senkrecht geneigt zum ersten Abschnitt (31) und/oder zum dritten Abschnitt (33) angeordnet ist,
- bei dem der zweite Abschnitt (32) zwischen dem ersten Abschnitt (31) und dem dritten Abschnitt (33) angeordnet ist und den ersten Abschnitt (31) mit dem dritten Abschnitt (33) verbindet,
- bei dem der dritte Abschnitt (33) parallel zum ersten Abschnitt (31) ausgerichtet ist,
- bei dem der dritte Abschnitt (33) eine lange Seite (62) aufweist,
- bei dem die dritte Lasche (73) und die vierte Lasche (74) an der langen Seite (62) des dritten Abschnitts (33) gegenüberliegend angeordnet sind und aus der ersten Ebene (21) auf eine gemeinsame Seite des dritten Abschnitts (33) und auf die gleiche Seite wie die erste und zweite Lasche (71, 72) ragen,
- bei dem die dritte Lasche (73) ausgebildet ist, oberseitig am ersten Bauteil (141) aufzuliegen,
- bei dem die vierte Lasche (74) ausgebildet ist, das zweite Bauteil (142) unterseitig abzustützen und gegen ein Herabfallen zu sichern.

9. Verliersicherungssystem (2) gemäß Anspruch 8,
- bei dem beim Sicherungselement (1) der dritte Abschnitt (33) mindestens eine zweite Durchgangsöffnung (42) aufweist,
- bei dem die zweite Durchgangsöffnung (42) ausgebildet ist, eine zweite lösbare Verbindung (52) zum Befestigen des Sicherungselements (1) an dem ersten Bauteil (141) zumindest abschnittsweise aufzunehmen.

10. Verliersicherungssystem (2) gemäß einem der Ansprüche 8 bis 9,
- bei dem die dritte Lasche (73) eine dritte Aussparung (123), und/oder bei dem die vierte Lasche (74) eine vierte Aussparung (124) aufweist,
- bei dem die dritte Lasche (73) mit einem dritten festen Ende (103) und die vierte Lasche (74) mit einem vierten festen Ende (104) mit der langen Seite (62) des dritten Abschnitts (33) verbunden sind,
- bei dem die dritte Aussparung (123) ausgebildet ist, das erste Bauteil (141) zumindest abschnittsweise aufzunehmen und/oder bei dem die vierte Aussparung (124) ausgebildet ist, das zweite Bauteil (142) zumindest abschnittsweise aufzunehmen,
- bei dem die dritte Aussparung (123) angrenzend an das dritte feste Ende (103) der dritten Lasche (73) und/oder bei dem die vierte Aussparung (124) an das vierte feste Ende (104) der vierten Lasche (74) angeordnet ist,
- bei dem die dritte Aussparung (123) auf einer zur vierten Lasche (74) zugewandten Seite der dritten Lasche (73) angeordnet ist und zur vierten Lasche (74) hin geöffnet ist, und/oder
- bei dem die vierte Aussparung (124) auf einer zur dritten Lasche (73) zugewandten Seite der vierten Lasche (74) angeordnet ist und zur dritten Lasche (73) hin geöffnet ist.

11. Verliersicherungssystem (2) nach einem der Ansprüche 8 bis 10,
- bei dem sich die dritte Lasche (73) zumindest abschnittsweise in einer vierten Ebene (24) und die vierte Lasche (74) zumindest abschnittsweise in einer fünften Ebene (25) erstrecken,
- bei dem die zweite Ebene (22) und die vierte Ebene (24) und/oder die dritte Ebene (23) und die fünfte Ebene (25) parallel zueinander angeordnet sind.

12. Verliersicherungssystem (2) nach einem der Ansprüche 8 bis 11, bei dem die dritte Lasche (73) und/oder die vierte Lasche (74) auf einer dem ersten Abschnitt (31) zugewandten Seite des dritten Abschnitts (33) und die erste Lasche (71) und/oder die zweite Lasche (72) auf einer dem dritten Abschnitt (33) zugewandten Seite des ersten Abschnitts (31) angeordnet sind.

13. Verliersicherungssystem (2) nach einem der Ansprüche 8 bis 11, bei dem die dritte Lasche (73) und/oder die vierte Lasche (74) auf einer dem ersten Abschnitt (31) abgewandten Seite des dritten Abschnitts (33) und die erste Lasche (71) und/oder die zweite Lasche (72) auf einer dem dritten Abschnitt (33) abgewandten Seite des ersten Abschnitts (31) angeordnet sind.

## Claims

1. Loss-prevention system (2),
- in which the loss-prevention system (2) has at least one securing element (1), a first component (141), a second component (142), and at least a first releasable connection (51) and a third releasable connection (53),
- in which the securing element (1) is configured for securing the two components (141, 142) of the rail vehicle (2), wherein the securing element (1) has a first portion (31), a first lug (71) and a second lug (72), wherein the first portion (31) is configured in the form of an elongate plate and extends in a first plane (21), wherein at least one first through-opening (41) is arranged in the first portion (31), wherein the first through-opening (41) is configured to at least partially receive the first releasable connection (51) for fastening the securing element (1) to the first component (141), wherein the first portion (31) has a long side (61), wherein the first lug (71) and the second lug (72) are arranged opposite one another on the long side (61) of the first portion (31) and project from the first plane (21) onto a common side of the first portion (31), wherein the first lug (71) is configured to rest on the top side of the first component (141), and wherein the second lug (72) is configured to support the second component (141) on its underside and to secure it against falling off,
- in which the first releasable connection (51) engages through the first through-opening (41) and fastens the securing element (1) to the first component (141),
- in which the third releasable connection (53), loaded in tension, connects the first component (141) to the second component (142),
- in which the first component (141) and the second component (142) are arranged at least partially between the first lug (71) and the second lug (72),
- in which the second component (142), upon failure and/or releasing of the third releasable connection (53), rests on the second lug (72) and the second lug (72) secures the second component (142) against falling down, and the first lug (71), upon failure and/or releasing of the first releasable connection (51), rests on the first component (141) and retains the securing element (1) on the first component (141).

2. Loss-prevention system (2) according to Claim 1,
- in which the first component (141) has a first engagement portion (171),
- in which the first engagement portion (171) is oriented parallel to the first portion (31),
- in which the first engagement portion (171) engages in the first cutout (121),
- in which, upon failure and/or releasing of the third releasable connection (53), a first stop face (181) of the first engagement portion (171), which is arranged at a free end of the first engagement portion (171), rests on a bottom (131) of the first cutout (121).

3. Loss-prevention system (2) according to Claim 2,
- in which the second component (142) has a second engagement portion (172),
- in which the second engagement portion (172) is oriented parallel to the first portion (31) and extends in an opposite direction to the first engagement portion (171),
- in which the second engagement portion (172) engages in the second cutout (122),
- in which, upon failure and/or releasing of the third releasable connection (53), a second stop face (182) of the second engagement portion (172), which is arranged at a free end of the second engagement portion (172), rests on a bottom (132) of the second cutout (122).

4. Loss-prevention system (2) according to Claim 1,
- in which, in the securing element (1), the first lug (71) has a first cutout (121),
- in which the first cutout (121) is configured to at least partially receive the first component (141),
- in which the first lug (71) is connected by a first fixed end (101) to the long side (61) of the first portion (31),
- in which the first cutout (121) is arranged on a side of the first lug (71) facing the second lug (72) and is open toward the second lug (72),
- in which the first cutout (121) is arranged in a manner adjoining the fixed end (101),
- in which the first cutout (121) is configured in the form of a slot.

5. Loss-prevention system (2) according to Claim 4,
- in which, in the securing element (1), the second lug (72) has a second cutout (122),
- in which the second cutout (122) is configured to at least partially receive the second component (142),
- in which the second lug (72) is connected by a second fixed end (102) to the long side (61) of the first portion (31),
- in which the second cutout (122) is arranged in a manner adjoining the second fixed end (102),
- in which the second cutout (122) is configured in the form of a slot,
- in which the second cutout (122) is arranged on a side of the second lug (72) facing the first lug (71) and is open toward the first lug (71).

6. Loss-prevention system (2) according to one of the preceding claims,
- in which, in the securing element (1), the first lug (71) has a first lug region (81) and a first arc region (91) and the second lug (72) has a second lug region (82) and a second arc region (92),
- in which the first and the second lug region (81, 82) are configured in a planar manner,
- in which the first lug region (81) extends in a second plane (22) and the second lug region (82) extends in a third plane (23),
- in which the second and the third plane (22, 23) are each arranged in a first direction (11) parallel to the first portion (31) and in a second direction (12) perpendicularly at an angle to the first portion (31),
- in which the first lug region (81) adjoins a first free end (111) and the second lug region (82) adjoins a second free end (112),
- in which the first arc region (91) connects the first lug region (81) to the first portion (31) and the second arc region (92) connects the second lug region (82) to the first portion (31).

7. Loss-prevention system (2) according to Claim 6, in which, in the securing element (1), the second plane (22) and the third plane (23) overlap or the second plane (22) is configured in a manner parallel to the third plane (23).

8. Loss-prevention system (2) according to one of the preceding claims,
- in which the securing element (1) has a second portion (32), a third portion (33), a third lug (73) and a fourth lug (74),
- in which the second portion (32) and the third portion (33) are each configured in the form of an elongate plate,
- in which the second portion (32) and the third portion (33) extend in the first plane (21),
- in which the third portion (33) and the first portion (31) are arranged in an offset manner with respect to one another,
- in which the second portion (32) is arranged perpendicularly at an angle to the first portion (31) and/or to the third portion (33),
- in which the second portion (32) is arranged between the first portion (31) and the third portion (33) and connects the first portion (31) to the third portion (33),
- in which the third portion (33) is oriented parallel to the first portion (31),
- in which the third portion (33) has a long side (62),
- in which the third lug (73) and the fourth lug (74) are arranged opposite one another on the long side (62) of the third portion (33) and project from the first plane (21) onto a common side of the third portion (33) and onto the same side as the first and second lugs (71, 72),
- in which the third lug (73) is configured to rest on the top side of the first component (141),
- in which the fourth lug (74) is configured to support the second component (142) on its underside and to secure it against falling off.

9. Loss-prevention system (2) according to Claim 8,
- in which, in the securing element (1), the third portion (33) has at least one second through-opening (42),
- in which the second through-opening (42) is configured to at least partially receive a second releasable connection (52) for fastening the securing element (1) to the first component (141) .

10. Loss-prevention system (2) according to either of Claims 8 and 9,
- in which the third lug (73) has a third cutout (123) and/or in which the fourth lug (74) has a fourth cutout (124),
- in which the third lug (73) is connected by a third fixed end (103) and the fourth lug (74) is connected by a fourth fixed end (104) to the long side (62) of the third portion (33),
- in which the third cutout (123) is configured to at least partially receive the first component (141) and/or in which the fourth cutout (124) is configured to at least partially receive the second component (142),
- in which the third cutout (123) is arranged in a manner adjoining the third fixed end (103) of the third lug (73) and/or in which the fourth cutout (124) is arranged in a manner adjoining the fourth fixed end (104) of the fourth lug (74),
- in which the third cutout (123) is arranged on a side of the third lug (73) facing the fourth lug (74) and is open toward the fourth lug (74), and/or
- in which the fourth cutout (124) is arranged on a side of the fourth lug (74) facing the third lug (73) and is open toward the third lug (73).

11. Loss-prevention system (2) according to one of Claims 8 to 10,
- in which the third lug (73) extends at least partially in a fourth plane (24) and the fourth lug (74) extends at least partially in a fifth plane (25),
- in which the second plane (22) and the fourth plane (24) and/or the third plane (23) and the fifth plane (25) are arranged parallel to one another.

12. Loss-prevention system (2) according to one of Claims 8 to 11, in which the third lug (73) and/or the fourth lug (74) is/are arranged on a side of the third portion (33) facing the first portion (31) and the first lug (71) and/or the second lug (72) is/are arranged on a side of the first portion (31) facing the third portion (33).

13. Loss-prevention system (2) according to one of Claims 8 to 11, in which the third lug (73) and/or the fourth lug (74) is/are arranged on a side of the third portion (33) facing away from the first portion (31) and the first lug (71) and/or the second lug (72) is/are arranged on a side of the first portion (31) facing away from the third portion (33).

## Revendications

1. Système anti-perte (2)
- dans lequel le système anti-perte (2) comprend au moins un élément de sécurité (1), un premier composant (141), un deuxième composant (142) et au moins une première liaison amovible (51) et une troisième liaison amovible (53),
- dans lequel le système anti-perte (1) est conçu pour la sécurisation des deux composants (141, 142) du véhicule ferroviaire (2), dans lequel l'élément de sécurisation (1) comprend une première portion (31), une première patte (71) et une deuxième patte (72), dans lequel la première portion (31) est conçue sous la forme d'une plaque allongée et s'étend dans un premier plan (21), dans lequel, dans la première portion (31), est disposée au moins une première ouverture de passage (41), dans lequel la première ouverture de passage (41) est conçue pour loger la première liaison amovible (51) pour la fixation de l'élément de sécurisation (1) au premier composant (141) au moins à certains endroits, dans lequel la première portion (31) comprend un côté long (61), dans lequel la première patte (71) et la deuxième patte (72) sont disposées l'une en face de l'autre sur le côté long (61) de la première portion (31) et dépassent du premier plan (21) vers un côté commun de la première portion (31), dans lequel la première patte (71) est conçue pour reposer, sur le côté supérieur, sur le premier composant (141) et dans lequel la deuxième patte (72) est conçue pour soutenir le deuxième composant (141) sur le côté inférieur et le sécuriser contre une chute,
- dans lequel la première liaison amovible (51) traverse la première ouverture de passage (41) et fixe l'élément de sécurisation (1) au premier composant (141),
- dans lequel la troisième liaison amovible (53) relie, avec une sollicitation en traction, le premier composant (141) au deuxième composant (142),
- dans lequel le premier composant (141) et le deuxième composant (142) sont disposés entre la première patte (71) et la deuxième patte (72) au moins par tronçons,
- dans lequel le deuxième composant (142), lors d'une défaillance et/ou d'un détachement de la troisième liaison amovible (53), repose sur la deuxième patte (72) et la deuxième patte (72) sécurise le deuxième composant (142) contre une chute et la première patte (71), lors d'une défaillance et/ou d'un détachement de la première liaison amovible (51), repose sur le premier composant (141) et maintient l'élément de sécurisation (1) sur le premier composant (141).

2. Système anti-perte (2) selon la revendication 1,
- dans lequel le premier composant (141) comprend une première portion d'emboîtement (171),
- dans lequel la première portion d'emboîtement (171) est orientée parallèlement à la première portion (31),
- dans lequel la première portion d'emboîtement (171) s'emboîte dans le premier évidement (121),
- dans lequel, lors d'une défaillance et/ou d'un détachement de la troisième liaison amovible (53), une première surface de butée (181) de la première portion d'emboîtement (171), qui est disposée au niveau d'une extrémité libre de la première portion d'emboîtement (171), repose sur un fond (131) du premier évidement (121).

3. Système anti-perte (2) selon la revendication 2,
- dans lequel le deuxième composant (142) comprend une deuxième portion d'emboîtement (172),
- dans lequel la deuxième portion d'emboîtement (172) est orientée parallèlement à la première portion (31) et s'étend dans une direction opposée à la première portion d'emboîtement (171),
- dans lequel la deuxième portion d'emboîtement (172) s'emboîte dans le deuxième évidement (122),
- dans lequel, lors d'une défaillance et/ou d'un détachement de la troisième liaison amovible (53), une deuxième surface de butée (182) de la deuxième portion d'emboîtement (172), qui est disposée au niveau d'une extrémité libre de la deuxième portion d'emboîtement (172), repose sur un fond (132) du deuxième évidement (122).

4. Système anti-perte (2) selon la revendication 1,
- dans lequel, dans l'élément de sécurisation (1), la première patte (71) comprend un premier évidement (121),
- dans lequel le premier évidement (121) est conçu pour loger le premier composant (141) au moins par tronçons,
- dans lequel la première patte (71) est reliée, avec une première extrémité fixe (101), avec le côté long (61) de la première portion (31),
- dans lequel le premier évidement (121) est disposé sur un côté de la première patte (71) orienté vers la deuxième patte (72) et est ouvert en direction de la deuxième patte (72),
- dans lequel le premier évidement (121) est disposé de manière adjacente à l'extrémité fixe (101),
- dans lequel le premier évidement (121) est formé en forme de fente.

5. Système anti-perte (2) selon la revendication 4,
- dans lequel, dans l'élément de sécurisation (1), la deuxième patte (72) comprend un deuxième évidement (122),
- dans lequel le deuxième évidement (122) est conçu pour loger le deuxième composant (142) au moins par tronçons,
- dans lequel la deuxième patte (72) est reliée, avec une deuxième extrémité fixe (102), avec le côté long (61) de la première portion (31),
- dans lequel le deuxième évidement (122) est disposé de manière adjacente à la deuxième extrémité fixe (102),
- dans lequel le deuxième évidement (122) est formé en forme de fente,
- dans lequel le deuxième évidement (122) est disposé sur un côté de la deuxième patte (72) orienté vers la première patte (71) et est ouvert en direction de la première patte (71) .

6. Système anti-perte (2) selon l'une des revendications précédentes,
- dans lequel, dans l'élément de sécurisation (1), la première patte (71) comprend une première partie de patte (81) et une première partie courbe (91) et la deuxième patte (72) comprend une deuxième partie de patte (82) et une deuxième partie courbe (92),
- dans lequel les première et deuxième parties de pattes (81, 82) sont conçues sous la forme de plaques,
- dans lequel la première partie de patte (81) s'étend dans un deuxième plan (22) et la deuxième partie de patte (82) s'étend dans un troisième plan (23),
- dans lequel les deuxième et troisième plans (22, 23) sont disposés respectivement dans une première direction (11) parallèle à la première portion (31) et dans une deuxième direction (12) perpendiculaire à la première portion (31),
- dans lequel la première partie de patte (81) est adjacente à une première extrémité libre (111) et la deuxième partie de patte (82) est adjacente à une deuxième extrémité libre (112),
- dans lequel la première partie courbe (91) relie la première partie de patte (81) avec la première portion (31) et la deuxième partie courbe (92) relie la deuxième partie de patte (82) avec la première portion (31).

7. Système anti-perte (2) selon la revendication 6, dans lequel, dans l'élément de sécurisation (1), le deuxième plan (22) et le troisième plan (23) se superposent ou bien le deuxième plan (22) est parallèle au troisième plan (23).

8. Système anti-perte (2) selon l'une des revendications précédentes,
- dans lequel l'élément de sécurisation (1) comprend une deuxième portion (32), une troisième portion (33), une troisième patte (73) et une quatrième patte (74),
- dans lequel la deuxième portion (32) et la troisième portion (33) sont conçues respectivement sous la forme d'une plaque allongée,
- dans lequel la deuxième portion (32) et la troisième portion (33) s'étendent dans un premier plan (21),
- dans lequel la troisième portion (33) et la première portion (31) sont disposées de manière décalée entre elles,
- dans lequel la deuxième portion (32) est disposée perpendiculairement à la première portion (31) et/ou à la troisième portion (33),
- dans lequel la deuxième portion (32) est disposée entre la première portion (31) et la troisième portion (33) et relie la première portion (31) avec la troisième portion (33),
- dans lequel la troisième portion (33) est orientée parallèlement à la première portion (31),
- dans lequel la troisième portion (33) comprend un côté long (62),
- dans lequel la troisième patte (73) et la quatrième patte (74) sont disposées en face l'une de l'autre sur le côté long (62) de la troisième portion (33) et dépassant du premier plan (21) vers un côté commun de la troisième portion (33) et vers le même côté que les première et deuxième pattes (71, 72),
- dans lequel la troisième patte (73) est conçue pour reposer, sur le côté supérieur, sur le premier composant (141),
- dans lequel la quatrième patte (74) est conçue pour soutenir le deuxième composant (142) sur le côté inférieur et le sécuriser contre une chute.

9. Système anti-perte (2) selon la revendication 8,
- dans lequel, dans l'élément de sécurisation (1), la troisième portion (33) comprend au moins une deuxième ouverture de passage (42),
- dans lequel la deuxième ouverture de passage (42) est conçue pour loger une deuxième liaison amovible (52) pour la fixation de l'élément de sécurisation (1) au premier composant (141), au moins par tronçons.

10. Système anti-perte (2) selon l'une des revendications 8 à 9,
- dans lequel la troisième patte (73) comprend un troisième évidement (123) et/ou dans lequel la quatrième patte (74) comprend un quatrième évidement (124),
- dans lequel la troisième patte (73) est reliée, avec une troisième extrémité fixe (103), et la quatrième patte (74) est reliée, avec une quatrième extrémité libre (104), avec le côté long (62) de la troisième portion (33),
- dans lequel le troisième évidement (123) est conçu pour loger le premier composant (141) au moins par tronçons et/ou dans lequel le quatrième évidement (124) est conçu pour loger le deuxième composant (142) au moins par tronçons,
- dans lequel le troisième évidement (123) est disposé de manière adjacente à la troisième extrémité fixe (103) de la troisième patte (73) et/ou dans lequel le quatrième évidement (124) est disposé sur la quatrième extrémité fixe (104) de la quatrième patte (74),
- dans lequel le troisième évidement (123) est disposé sur un côté de la troisième patte (73) orienté vers la quatrième patte (74) et est ouvert en direction de la quatrième patte (74) et/ou
- dans lequel le quatrième évidement (124) est disposé sur un côté de la quatrième patte (74) orienté vers la troisième patte (73) et est ouvert en direction de la troisième patte (73) .

11. Système anti-perte (2) selon l'une des revendications 8 à 10,
- dans lequel la troisième patte (73) s'étend au moins par tronçons dans un quatrième plan (24) et la quatrième patte (74) s'étend au moins par tronçons dans un cinquième plan (25),
- dans lequel le deuxième plan (22) et le quatrième plan (24) et/ou le troisième plan (23) et le cinquième plan (25) sont disposés parallèlement entre eux.

12. Système anti-perte (2) selon l'une des revendications 8 à 11, dans lequel la troisième patte (73) et/ou la quatrième patte (74) sont disposées sur un côté de la troisième portion (33) orienté vers la première portion (31) et la première patte (71) et/ou la deuxième patte (72) sont disposées sur un côté de la première portion (31) orienté vers la troisième portion (33).

13. Système anti-perte (2) selon l'une des revendications 8 à 11, dans lequel la troisième patte (73) et/ou la quatrième patte (74) sont disposées sur un côté de la troisième portion (33) détourné à la première portion (31) et la première patte (71) et/ou la deuxième patte (72) sont disposées sur un côté de la première portion (31) détourné à la troisième portion (33).
